# DEMANDE DE BREVET EUROPEEN

(11) **EP 0 652 333 A1**
(43) Date de publication de la demande: **10.05.1995**
(21) Numéro de dépôt: 93870211.5
(22) Date de dépôt: 05.11.1993
(51) Int. Cl.: E04B 1/94, A62C 2/06

(54) **Chape resistant au feu pour conduits de ventilation**

(71) Demandeur: LICA S.p.r.l., B-1080 Molenbeek-St-Jean (BE)
(72) Inventeur: Licini, Armand, B-1700 Dilbeek (BE)

(57) **Abrégé**

Procédé de protection au feu de conduits de ventilation ou cloisonnements.

L'élément qui assure la résistance au feu est une chape continue.

Cette chape de par sa composition et son application est apte à retarder les effets du feu.

Une armature adéquate contribue à la stabilité de la chape.

La chape est totalement inoffensive quel que soit sa température.

La chape est constituée de sel de silico aluminate de potassium de fer, de plâtre, d'eau et d'un métal d'armature.

Le nom commercial est **"PYROLICA"**

## Description

L'invention concerne en un procédé de protection permettant la résistance au feu des conduits ( métalliques ) de ventilation ou parois de séparations entre différents volumes contenant de l'air, des gaz ou autres fluides.

Le procédé consiste en l'application d'une chape de protection ayant pour but de protéger les parois en constituant une barrière retardatrice et résistante a la propagation du feu, de la chaleur, des fumées et de toutes les nuisances due au surcroit de temperature que l'absence de celle-ci entraînerait.

Le procédé a également pour but de retarder la destruction des parois causée par le feu, la chaleur, la conséquente dilatation de la matière ou amoindrir les effets de la limite d'élasticité de celle-ci.

Le type d'application, l'épaisseur, la variation en proportion des composantes, la fluidité ou compacité petit être modulée en fonction des situations d'espèce et du résultat et des performances que l'on souhaite obtenir.

Cette chape ne comprend pas de joints et s'applique sur toutes surfaces en épousant leurs formes.

Les raccords de la chape se réalisent sans en altérer l'efficacité et les performances.

Un treillis en fils métallique de faible diamètre ou un métal déployé, nervuré de faible épaisseur maintenu a la surface à protéger est incorporé dans la chape.

Cette armature, lorsque soumise à la chaleur, doit non seulement maintenir ses efforts de dilatation compatibles à la résistance de la chape mais constituer un renforcement de celle-ci en cas de sollicitations mécaniques ou d'effets thermiques.

Dans des conditions normales, la chape est physiologiquement compatible à l'homme, ne dégage pas de poussières, odeurs, n'est pas agressive ou toxique, est stable dans le temps, n'est pas sujette à vieillissement, décomposition et n'est pas attaquée par les rongeurs et la vermine.

Elle est apte d'une certaine rétention en eau ce qui contribue à augmenter et assurer les performances qui lui sont demandées.

Soumis aux très fortes températures, le liant de la chape se décompose en vapeur d'eau et sulfate de calcium.

La chape est réalisé par un mélange de sel de silico aluminate de potassium de fer sous l' aspect de mica exfolié et sous forme de grains, et est lié à l'aide de plâtre gâché par adjonction d' eau.

Les proportions de ces composantes peuvent varier en fonction des performances souhaitées et des modes d' application.

Le nom commercial du procédé est **"PYROLICA"**.

## Revendications

1. Procédé de protection au feu des conduits métalliques de ventilation ainsi que toute autre cloison ou séparation par l' application d' une chape selon les méthodes les plus appropriées en fonction des cas d'espèces et des performances souhaitées.
Les proportions des composants sont également déterminants pour l'obtention du résultat optimum tels que l'adhérence, la dilatation, la déformation locale ou la résistance mécanique particulière.
Cette chape est continue sans joints ni raccords défavorables et renforcée d' une armature métallique.
Le procédé ne comprend aucun inconvénient pour la santé et le bien-être de l'homme, ne dégage pas poussières, fibres, gaz nocifs ou fumées.
